(19) Europäisches Patentamt

European Patent Office

Office européen des brevets

(11) **EP 0 660 085 B1**

(12) **EUROPÄISCHE PATENTSCHRIFT**

(45) Veröffentlichungstag und Bekanntmachung des Hinweises auf die Patenterteilung:
**09.07.1997  Patentblatt 1997/28**

(51) Int Cl.⁶: **G01D 5/34**, G01D 5/249

(21) Anmeldenummer: **93120658.5**

(22) Anmeldetag: **22.12.1993**

(54) **Absolutes Positionsmesssystem**

**Absolute position measuring device**

**Dispositif de mesure de la position absolue**

(84) Benannte Vertragsstaaten:
**AT CH FR GB IT LI**

(43) Veröffentlichungstag der Anmeldung:
**28.06.1995  Patentblatt 1995/26**

(73) Patentinhaber:
- **Troll, Christian, Dr.-Ing. habil.**
  **09661 Gossberg (DE)**
- **Trumpold, Harry, Prof. Dr.-Ing. habil. Dr.E.h.**
  **09127 Chemnitz (DE)**
- **Kipping, Uwe, Dipl.-Ing.**
  **04600 Altenburg (DE)**

(72) Erfinder:
- **Troll, Christian, Dr.-Ing. habil.**
  **09661 Gossberg (DE)**

- **Trumpold, Harry, Prof. Dr.-Ing. habil. Dr.E.h.**
  **09127 Chemnitz (DE)**
- **Kipping, Uwe, Dipl.-Ing.**
  **04600 Altenburg (DE)**

(74) Vertreter: **Ninnemann, Detlef, Dipl.-Ing. et al**
**Patentanwälte Maikowski & Ninnemann,**
**Xantener Strasse 10**
**10707 Berlin (DE)**

(56) Entgegenhaltungen:
EP-A- 0 072 549         WO-A-92/04776
GB-A- 2 188 144        GB-A- 2 247 581

**Beschreibung**

Die Erfindung betrifft ein absolutes Positionsmeßsystem zur Bestimmung der Lage zweier relativ zueinander beweglicher Objekte gemäß dem Oberbegriff des Patentanspruchs 1 und findet bei Längen- und Winkelmeßsystemen Anwendung. Es wird von EP-A- 0 072 549 ausgegangen.

Aus der DE 2952106 A1 ist ein mehrspuriges Positionsmeßsystem bekannt, welches eine inkrementale Spur und eine Spur nichtperiodischer Struktur in Form von Gruppen von Markierungsstrichen aufweist. Die Gruppen von. Markierungsstrichen mit unregelmäßiger Strichverteilung dienen als Referenzmarken zur Bestimmung einer bestimmten Lage zwischen den beiden relativ zueinander beweglichen Objekten. Der Neigungswinkel zwischen den Strichen der beiden Spuren ist gleich und beträgt 90° zur Meßrichtung. Durch die Referenzmarken wird die Meßgenauigkeit und die Auflösung des Meßsystems nicht erhöht.

Nachteil des inkrementalen Maßstabes ist, daß sich bei Maßstabsfehlern der Meßfehler linear fortsetzt und erst bei der nächsten Referenzmarke korrigiert werden kann. Führungsrichtung und Abtastrichtung müssen sehr genau sein. Die Meßgenauigkeit hängt von der Gravur der Skala sowie von der Vergrößerung des optischen Systems ab.

Es sind weiterhin absolute Positionsmeßsysteme bekannt, die mehrspurige Winkelcodescheiben benutzen. Mit diesen Systemen ist jedoch nur eine begrenzte Auflösung möglich. Desweiteren treten von einem codierten Schritt zum nächsten in der Abtasteinrichtung undefinierbare Zustände auf, die zu Meßfehlern führen und nur durch einen erhöhten Aufwand korrigiert werden können.

Es wurde versucht, die Auflösung mehrspuriger Codemeßsysteme zu erhöhen, indem man die Kanten jedes Codefeldes schräg ausführte. Ein derartiges Meßsystem ist in der WO 92/04776 A beschrieben. Die Auflösung und absolut codierbare Meßlänge ist trotz großer Baugröße sehr beschränkt.

In der DE 3427067 A1 wird ein optisches Längenmeßverfahren mit codiertem Absolutmaßstab beschrieben, der Maßstabsstriche und codierte Marken in Form von Strichcodierungen aufweist, die jedoch in einer Spur angeordnet sind, wobei die Maßstabsstriche Element der Strichcodierung sind. Dieses System ist ebenfalls in seiner Dynamik begrenzt. Es kommt bei einer hohen Abtastgeschwindigkeit zu einer Verwischung des Gesamtbildes.

In der DD 256 910 A1 und der GB-A-2 188 144 wird ein Längenmeßsystem beschrieben, bei dem unter einem Neigungswinkel gegen die Meßrichtung verlaufende Striche abgetastet werden. Nachteilig wirkt, daß mit kleiner werdendem Neigungswinkel der Positionsmarkierung die Abtastunsicherheit größer wird, bei großem Neigungswinkel die Absolutposition aber nur innerhalb eines kleinen Meßweges bestimmt werden kann.

Es sind weiterhin Winkelmeßsysteme bekannt, die optoelektronisch mit Hilfe eines Flächensensors eine exzentrisch gelagerte Scheibe abtasten. Dabei ist nachteilig, daß die Bedeckungsänderung in Bezug auf die Winkeländerung nichtlinear ist und daß die große Anzahl von auszuwertenden Elementen eine hohe Verarbeitungszeit und geringe Dynamik ergibt (DE 3641131 A1, DE 3831417 A1).

Aus der GB 2 247 581 A und der EP 0 072 549 A2 sind mehrspurige absolute Positionsmeßsysteme mit Blockcodierung in Form eines Gray- oder Binärcodes und zusätzlichen schrägen Strichen bekannt. Auch bei diesen Systemen ist nur eine geringe Auflösung erreichbar. Desweiteren treten auch bei diesen Systemen bei der Abtastung von einem Codeblock zum nächsten Codeblock undefinierbare Zustände auf, die zu Meßfehlern führen können. Zur eindeutigen Codebestimmung an den Übergängen zweier Codeblöcke sind gemäß der EP 0 072 549 A2 - von der diese Erfindung ausgeht - in einer weiteren Spur jeweils benachbart unterschiedlich ausgeführte schräge Striche vorgesehen. Ein derartiger Strich reicht über die Länge eines gesamten Codeblocks. Da jeweils nur zwei aufeinanderfolgende schräge Striche unterschiedlich sind, beträgt die Periode zwei Codeblöcke. Eine Bestimmung der absoluten Position mittels der schrägen Striche ist somit nicht möglich.

Der Erfindung liegt die Aufgabe zugrunde, ein absolutes Positionsmeßsystem zu schaffen, welches eine hohe Dynamik und Auflösung aufweist, mit dem Fehler des Meßsystems erkannt werden und das eine vereinfachte Konstruktion und Montage bei hoher Meßgenauigkeit gewährleistet.

Die Aufgabe wird erfindungsgemäß mit einem absoluten Positionsmeßsystem zur Bestimmung der Lage zweier relativ zueinander beweglicher Objekte mit den Merkmalen nach dem Patentanspruch 1 gelöst. Weitere Ausgestaltungen sind Gegenstand abhängiger Patentansprüche.

Dabei ist am ersten Objekt eine Strichstruktur aus einer in Meßrichtung liegenden Spur angeordnet, die durch parallel dazu liegende Spuren mit Strichen längs zur Meßrichtung ergänzt werden kann, wobei die Striche innerhalb dieser Spur gleiche Winkelneigungen haben und diese Spur eine nichtperiodische Struktur aufweist. Am zweiten Objekt ist ein Sensorarray mit einer linearen Matrix von Sensorelementen angeordnet und mit einer Auswerteelektronik ausgestattet. Die Striche innerhalb der Spur weisen eine Winkelneigung bezüglich der Meßrichtung auf. Der Neigungswinkel der Striche der Spur sollte in Abhängigkeit von der geforderten Dynamik und Auflösung im Bereich von 5°-40° liegen.

Der Erfassungsbereich des Sensorarrays weist eine von den Neigungswinkeln der Striche der Spur und von der Meßrichtung abweichende Winkelneigung auf. Die Meßwerterfassung durch das Sensorarray erfolgt derart, daß die Analogwerte der Auswerteeinrichtung in Form von Vektoren, aus denen die Flankenwerte gebildet werden, bzw. in Form eines Feldes von Flankenpositionswerten als Positionsinformation zur Verfügung gestellt werden. Dazu stellt jeweils ein Element des Sensorarrays den Mittelwert der von ihm ermittelten Helligkeitsverteilung über das Element zur Verfügung. Aus der Folge aller dieser Analogwerte (Flankenpositionswerte) des gesamten Senorarrays wird die exakte Lage des Sensorarrays zur nichtperiodischen Strichstruktur bestimmt, wodurch die erzielbare Auflösung unterhalb der Teilung des Sensorarrays liegt, d. h. der erzielbare Meßschritt kleiner als diese Teilung ist.

Durch die Anordnung von Spuren mit Strichen parallel zur Meßrichtung wird eine Hilfsmöglichkeit zur Justierung des Meßsystems geschaffen. Die Anordnung dieser Spuren neben der Spur mit periodischer Struktur, deren Striche eine Winkelneigung zur Meßrichtung aufweisen, gewährleistet eine hohe Genauigkeit und die Möglichkeit einer Fehlerkompensation bei der Absolutpositionsbestimmung.

Es können auch mehrere zueinander parallele Spuren am ersten Objekt angeordnet sein, wobei die Striche innerhalb einer Spur gleiche Winkelneigungen haben, die Striche der mehreren Spuren aber unterschiedliche Winkelneigungen aufweisen. Zumindest eine dieser Spuren besitzt eine nichtperiodische Struktur und eine weitere Spur eine periodische Struktur, wobei der Neigungswinkel der Striche der Spur mit nichtperiodischer Struktur dabei kleiner ist als der Neigungswinkel der Striche der Spur mit periodischer Struktur. Der Erfassungsbereich des Sensorarrays weist eine von den Neigungswinkeln der Striche der Spuren und von der Meßrichtung abweichende Winkelneigung auf.

Es können auch zwei Spuren mit periodischer Struktur längs der Meßrichtung zueinander spiegelbildlich angeordnet sein. Damit wird gewährleistet, daß Abweichungen von der Neigung des Sensorarrays bezüglich der Meßrichtung (vorzugsweise 90°) erkannt werden, denn jede Winkelabweichung des Sensorarrays bewirkt eine unterschiedliche Abbildung der Linienabstände dieser Spuren auf dem Sensorarray.

Durch die Anordnung von Spuren mit Strichen parallel zur Meßrichtung wird eine weitere Hilfsmöglichkeit zur Justierung des Meßsystems geschaffen. Die Anordnung dieser Spuren zwischen den Spuren, deren Striche eine Winkelneigung zur Meßrichtung aufweisen, dient zu deren Begrenzung und gewährleistet eine hohe Genauigkeit und die Möglichkeit einer Fehlerkompensation bei der Absolutpositionsbestimmung.

Durch eine kleine Teilung der periodischen Struktur und einen großen Neigungswinkel bezüglich der Meßrichtung bewirkt eine geringe Wegänderung in richtung eine große Änderung der Helligkeitsverteilung in Abtastrichtung. Damit wird eine höhere Auflösung als bei herkömmlichen Positionsmeßsystemen möglich.

Die Erfindung wird nachfolgend anhand von Ausführungsbeispielen näher erläutert.

Es zeigen

Figur 1 den Aufbau eines ersten Längenmeßsystems,

Figur 2 den Strichcode des Längenmeßsystems nach Figur 1,

Figur 3 einen Ausschnitt des Strichcodes nach Figur 2,

Figur 4 den Aufbau eines weiteren Längenmeßsystems,

Figur 5 den Aufbau eines Winkelmeßsystems,

Figur 6 den Strichcode des Längenmeßsystems nach Figur 4,

Figur 7 einen Ausschnitt des Strichcodes nach Figur 6,

Figur 8 den Strichcode des Winkelmeßsystems nach Figur 5,

Figur 9 einen Ausschnitt des Strichcodes nach Figur 8,

Figur 10 einen Strichcode für Winkelmeßsysteme in Form von r= (φ),

Figur 11 Winkelverhältnisse beim Strichcode des Winkelmeßsystems nach Figur 10,

Figur 12 das Prinzip der Längenmessung und

Figur 13 das Prinzip der Winkelmessung.

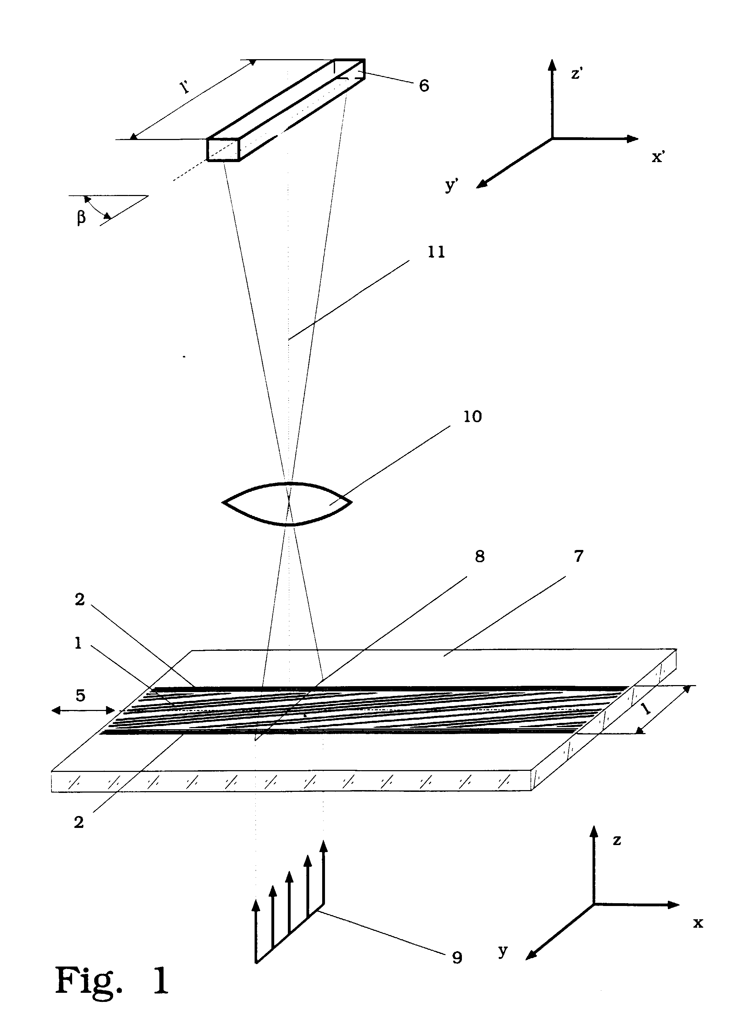

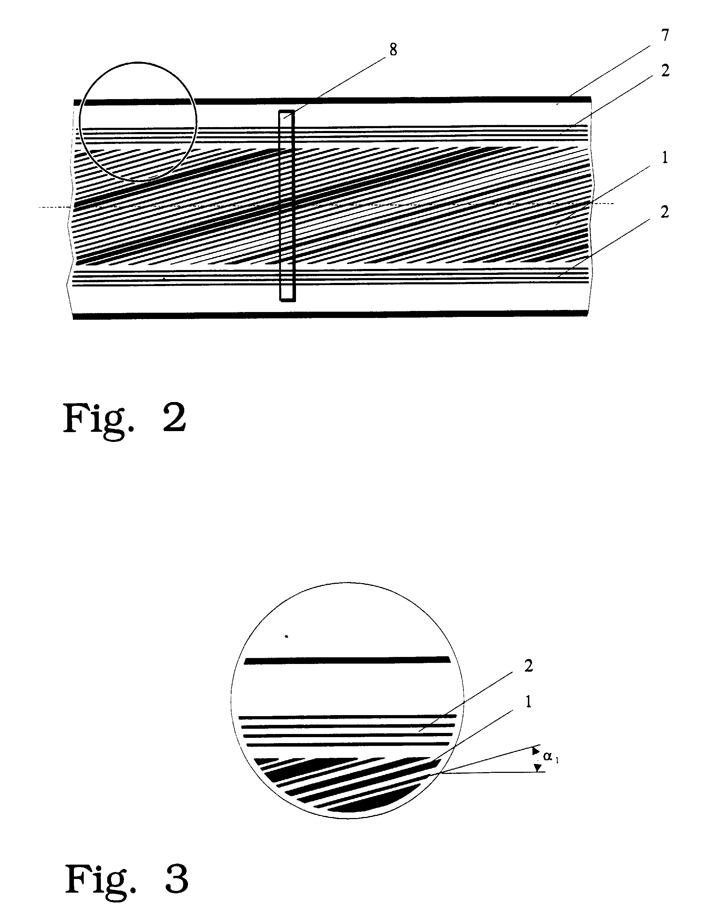

Figur 1 zeigt ein absolutes Längenmeßsystem, bei dem die in Figur 2 und Figur 3 dargestellte, mittels einer Lichtquelle 9 beleuchtete Strichstruktur 1,2 des Strichcodeträgers 7 über ein optisches System 10 abgetastet wird. Der Strichcodeträger 7 ist als lichtdurchlässiges Codelineal ausgeführt, wobei der lichtundurchlässige Strichcode 1,2 auf dessen Oberfläche aufgetragen ist. Die Meßwerterfassung erfolgt über eine CCD-Zeile als Sensorarray 6. Die Analogwerte (Flankenpositionswerte) des Sensorarrays 6 werden einer Auswerteeinrichtung in Form von Vektoren, aus denen die Flankenwerte (High-Low- und Low-High-Übergänge) gebildet werden, als Positionsinformationen bereitgestellt. Zur Erhöhung der Auflösung kann hierbei zusätzlich ein Interpolationsverfahren angewendet werden. Die Anordnung des Senorarrays 6 erfolgt im rechten Winkel β zur Meßrichtung 5. Die optische Achse 11 liegt senkrecht zum Strichcodeträger 7 und mittig zu den Spuren 1, 2.

In Figur 2 ist eine Draufsicht des Strichcodeträgers 7 gemäß Figur 1 vergrößert dargestellt. Der Strichcodeträger 7 weist drei Spuren auf, die in zwei Gruppen 1, 2 eingeteilt sind. Die Striche der mittleren Spur 1 besitzen eine nichtperiodische Strichcodestruktur, gekennzeichnet durch einen flachen Anstiegswinkel $\alpha_1$ der Striche bezüglich der Meßrichtung 5. Der Anstiegswinkel $\alpha_1$ ist in Figur 3 eingezeichnet. Figur 3 zeigt einen vergrößerten Ausschnitt des Strichcodeträgers 7 gemäß Figur 2. Neben dieser Spur ist jeweils eine Spur 2 mit Strichen parallel zur Meßrichtung angeordnet.

Die Auswertung der Strichstrukturen erlaubt sowohl die Unterstützung der Justage als auch die Absolutpositionsangabe mit Fehlerkorrektur. Die Absolutpositionsangabe ergibt sich aus einem von der nichtperiodischen Strichstruktur größendefinierten Wegsegment, wobei auch bei sehr großen Positioniergeschwindigkeiten das Wegsegment eindeutig erfaßbar ist.

Bei Auswertung des Strichcodes zur Bestimmung der Absolutposition und Unterstützung der Justage können Auswirkungen von Justageabweichungen des Meßsystems und Fertigungstoleranzen der Strichstruktur des Strichcodeträgers 7 durch Mittelung über die Anzahl der Flanken je Spur 1, 2 verringert werden. Die Anzahl der erfaßten Flanken je Spur 1, 2 erhöht bei deren Auswertung die statistische Sicherheit des Meßwertes.

Die Auswertung der Spur 1 mit nichtperiodischer Struktur ermöglicht die Bestimmung eines Wegsegmentes. Dieses Wegsegment ist bei einem kleinen Winkel $\alpha_1$ der Striche der Spur 1 bezüglich der Meßrichtung 5 auch bei großen Positionierbewegungen erfaßbar.

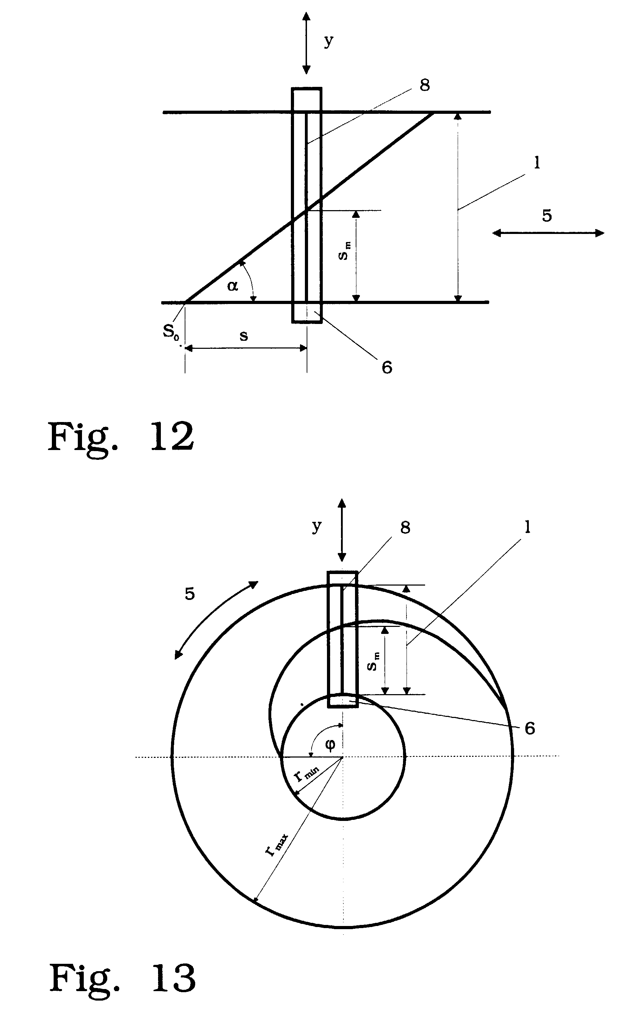

Die grundlegende Wirkungsweise der Abtastung schräger Linien durch ein Sensorarray 6 wird anhand der Figuren 12 und 13 erläutert.

Figur 12 stellt das Meßprinzip anhand der Abtastung einer einzelnen Linie bei einem Längenmeßsystem dar. Bei der Abtastung ergeben sich zwei Flanken, eine bei dem Helligkeitswechsel von Hell auf Dunkel und eine beim Wechsel von Dunkel auf Hell. Zur Wegbestimmung reicht im einfachsten Fall die Position einer abgetasteten Flanke aus, die den Abstand zu einem Bezugspunkt $S_o$ darstellt.

Das Verhältnis zwischen dem durch das Sensorarray 6 gemessenen Weg $S_m$ und dem zu messenden Weg $S$ ergibt sich in Abhängigkeit vom meßpositionsunabhängigen Anstiegswinkel $\alpha$ aus:

$$\frac{S_m}{S} = \tan \alpha = K = \text{konst.}$$

Somit ergibt sich die Istposition $S$ entsprechend dem Winkelwert von $\alpha$:

$$S = \frac{S_m}{K}$$

Da hierbei eine Transformation der zu messenden Wegstrecke $S$ in eine vom Sensorarray 6 erfaßte Wegstrecke $S_m$ in Abhängigkeit vom Anstiegswinkel $\alpha$ erfolgt, kann das Meßsystem als Transformationsmeßsystem bezeichnet werden.

In Figur 13 ist das Meßprinzip anhand der Abtastung einer einzelnen Linie bei einem Winkelmeßsystem dargestellt. Die Linie hat dabei die Form einer Archimedischen Spirale.

Für Archimedische Spiralen gilt:

$$\frac{\Delta r}{\Delta \varphi} = K = \text{konst.}$$

Damit ergibt sich die Istposition als Winkelwert $\varphi$:

$$\varphi = \frac{S_m}{K}$$

Hierbei wird eine Transformation des zu messenden Winkels $\varphi$ in eine vom Sensorarray 6 erfaßte Wegstrecke $S_m$ in Abhängigkeit von dieser Gleichung durchgeführt.

Der maximale Meßweg bei der Abtastung nur einer Linie ist durch die Länge begrenzt, die vom Sensorarray 6 in Bewegungsrichtung abgetastet werden kann. Aus diesem Grund werden mehrere Striche gleicher Orientierung versetzt angeordnet, so daß eine Spur beliebiger Länge entsteht. Bei der Abtastung werden somit vom Sensorarray 6 mehrere Striche erfaßt.

Ordnet man die Striche der Spur 1 nach einem definierten System an und variiert zusätzlich die Breite der Striche (Codierung), so kann damit eine Verschlüsselung der Absolutposition erfolgen. Sicherzustellen ist hierbei, daß das Strichmuster keine Wiederholungen besitzt und zu jedem vom Sensorarray 6 abgetasteten Muster eine genau definierte Absolutposition ermittelbar ist. Dabei erweist sich eine Blockcodierung günstig, wobei jeder Codeblock eine konstante Länge besitzt und die darin enthaltenen Striche eine verschlüsselte Blocknummer enthalten. Es ist hierbei sicherzustellen, daß in dem vom Sensorarray 6 abgetasteten Bereich bei jeder möglichen Position mindestens ein Codeblock vollständig erfaßt werden kann. Aus der Blocknummer und der Lage des Blockbildes auf dem Sensorarray 6 kann eine Absolutposition ermittelt werden.

Zur Fehlerkorrektur werden zwei Spuren 2 mit Strichen längs zur Meßrichtung 5 herangezogen. Dabei können sowohl die Abweichung von der vom Auswertesystem definierten Mitte (y'-Richtung) als auch bei Benutzung eines optischen Systems 10 Veränderungen der optischen Vergrößerung (1/1', z'-Richtung) korrigiert werden.

Für die Justage des Meßsystems werden die beiden Spuren 2 mit Strichen parallel zur Meßrichtung 5 benutzt, um das Sensorarray 6 an eine vom Auswertesystem definierte Mitte einzustellen (y'-Richtung) und um bei Benutzung eines optischen Systems 10 die optische Vergrößerung (1/1') einzustellen (z'-Richtung). Außerdem ist es möglich, den Strichcodeträger 7 in den für Fehler relevanten Richtungen für alle Meßpositionen auszurichten, wobei die definierte Mittenposition (y-Richtung) und die Abweichung der optischen Vergrößerung (1/1', z-Richtung) durch Lageänderung des Strichcodeträgers 7 eingestellt werden kann. Durch Nutzung der kompletten Spurinformationen aller Spuren 1, 2 kann ein Nullpositionsabgleich durchgeführt werden (y'-Richtung). Bei der Justage kann damit das Meßsystem in der Größenordnung der erfaßbaren Genauigkeit eingestellt werden.

Zur Bestimmung der Absolutposition des Meßwertes bei justierter Meßeinrichtung wird durch Auswertung der zwei Spuren 2 mit Strichen parallel zur Meßrichtung 5 der Fehler der Abweichung von der vom Auswertesystem definierten Mitte (y'-Richtung) und der Fehler der optischen Vergrößerung (1/1', z'-Richtung) bei Benutzung eines optischen Systems 10 korrigiert.

Das Wegsegment wird aus der Strichfolge des Strichcodes der mittleren Spur 1 mit nichtperiodischer Strichstruktur bestimmt. Die Absolutposition ergibt sich aus dem Wegsegment unter Beachtung der Fehlerkorrektur.

Die erzielbaren Vorteile der erfindungsgemäß ausgestalteten Positionsmeßsysteme nach Figuren 1 bis 3 gegenüber anderen Längen- und Winkelmeßsystemen sind:

- hohe Dynamik,

- keine vom Auswertesystem auszugleichende breitendifferenzen der Striche innerhalb der Spuren im gesamten Erfassungsbereich des Sensorarrays,

- Möglichkeit der Justierung des Sensorarrays und des Trägers der Strichstruktur durch eine spezielle Auswertung der Signale des Sensorarrays ohne zusätzliche Meßgeräte,

- Erkennbarkeit von durch Lageabweichungen, Verschmutzungen, und Störungen hervorgerufenen Fehlern.

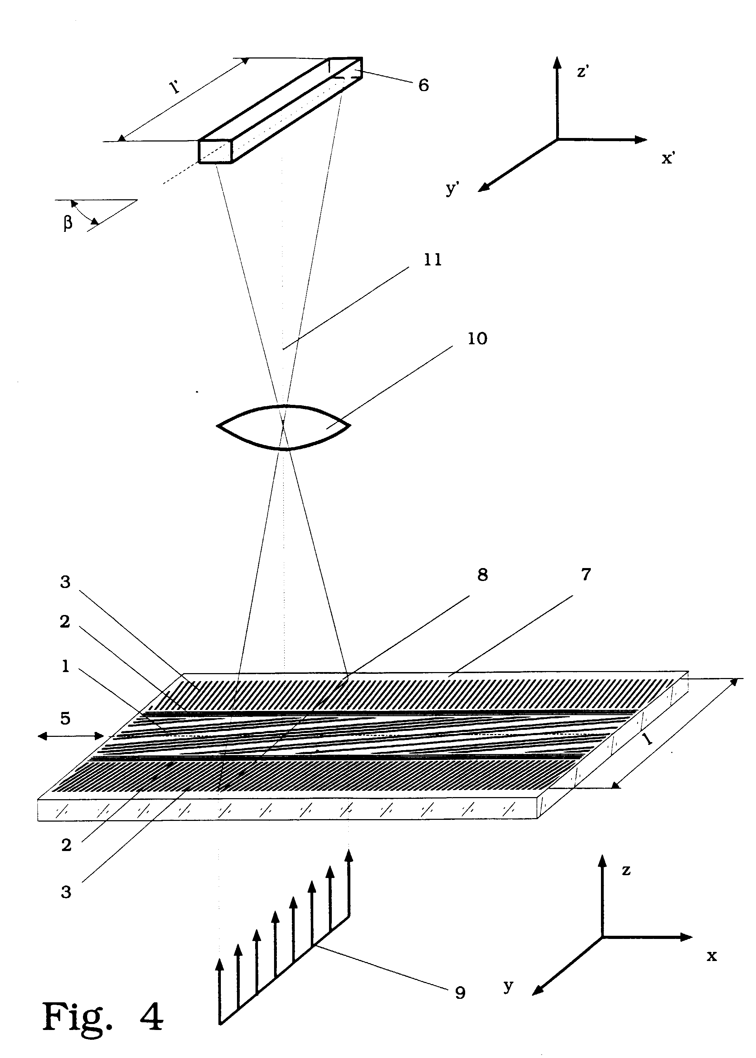

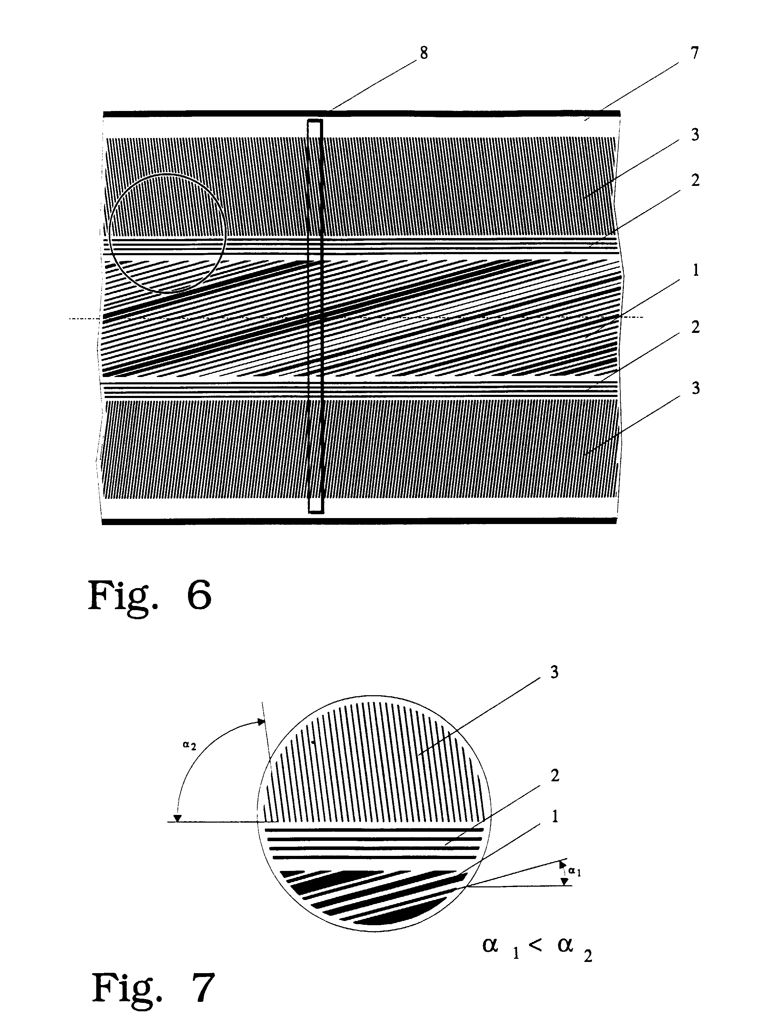

Figur 4 zeigt ein absolutes Längenmeßsystem, bei dem die in Figur 6 und Figur 7 dargestellte, mittels einer Lichtquelle 9 beleuchtete Strichstruktur 1, 2, 3 des Strichcodeträgers 7 über ein optisches System 10 abgetastet wird. Der Strichcodeträger 7 ist als lichtdurchlässiges Codelineal ausgeführt, wobei der lichtundurchlässige Strichcode auf dessen Oberfläche aufgetragen ist. Die Meßwerterfassung erfolgt über eine CCD-Zeile als Sensorarray 6. Die Analogwerte (Flankenpositionswerte) des Sensorarrays 6 werden in der Auswerteeinrichtung in Form von Vektoren, aus denen die Flankenwerte (High-Low- und Low-High-Übergänge) gebildet werden, als tionsinformationen bereitgestellt. Zur Erhöhung der Auflösung kann hierbei zusätzlich ein Interpolationsverfahren angewendet werden. Die Anordnung des Sensorarrays 6 erfolgt im rechten Winkel $\beta$ zur Meßrichtung 5. Die optische Achse 11 liegt senkrecht zum Strichcodeträger 7 und mittig zu den Spuren 1, 2, 3.

In Figur 6 ist eine Draufsicht des Strichcodeträgers 7 gemäß Figur 4 vergrößert dargestellt. Der Strichcodeträger 7 weist fünf Spuren auf, die in drei Gruppen 1, 2, 3 eingeteilt sind. Die Striche der mittleren Spur 1 besitzen eine nichtperiodische Strichcodestruktur, gekennzeichnet durch einen flachen Anstiegswinkel $\alpha_1$ der Striche bezüglich der Meßrichtung 5. Die Striche der beiden äußeren Spuren 3 besitzen eine periodische Struktur, gekennzeichnet durch einen steilen Anstieg $\alpha_2$ der Striche bezüglich der Meßrichtung 5 und einen flachen Anstieg bezüglich der Abtastrichtung des Sensorarrays 6.

Die Anstiegswinkel $\alpha_1$, $\alpha_2$ sind in Figur 7 eingezeichnet. Figur 7 zeigt einen vergrößerten Ausschnitt des Strichcodeträgers gemäß Figur 6. In Abhängigkeit von dem Einsatzgebiet sollte der Winkel $\alpha_1$ von Spur 1 (5°-30°) und der Winkel $\alpha_2$ von Spur 3 (70°-87°) betragen. Die Striche der beiden äußeren Spuren 3 sind spiegelbildlich zueinander angeordnet. Zwischen den beiden äußeren Spuren 3 und der mittleren Spur 1 ist jeweils eine Spur 2 mit Strichen parallel zur Meßrichtung angeordnet.

Die Auswertung der Strichstrukturen erlaubt sowohl die Unterstützung der Justage als auch die Absolutpositionsangabe mit Fehlerkorrektur. Die Absolutpositionsangabe untergliedert sich in ein von der Strichstruktur größendefiniertes Wegsegment und die Teilung innerhalb eines Wegsegmentes, wobei auch bei sehr großen Positioniergeschwindigkeiten das Wegsegment eindeutig erfaßbar ist.

Bei Auswertung des Strichcodes zur Bestimmung der Absolutposition und Unterstützung der Justage können Auswirkungen von Justageabweichungen des Meßsystems und Fertigungstoleranzen der Strichstruktur des Strichcodeträgers 7 durch Mittelung über die Anzahl der Flanken (Kanten der Striche) je Spur verringert werden. Die Anzahl der erfaßten. Flanken je Spur erhöht bei deren Auswertung die statistische Sicherheit des Meßwertes.

Die Auswertung der Spur 1 mit nichtperiodischer Struktur ermöglicht die Bestimmung eines Wegsegmentes. Dieses Wegsegment ist bei einem kleinen Winkel $\alpha_1$ der Striche der Spur bezüglich der Meßrichtung 5 auch bei großen Positionierbewegungen erfaßbar.

Die Auswertung der Spur 3 mit periodischer Struktur ermöglicht in Verbindung mit dem ermittelten Wegsegment eine Teilung innerhalb dieses Wegsegmentes. Ein kleiner Winkel $\alpha_2$ der Striche der Spur 3 bezüglich der Richtung des Sensorarrays 6 erlaubt eine sehr hohe Auflösung.

Zur Fehlerkorrektur werden zwei Spuren 2 mit Strichen längs zur Meßrichtung 5 herangezogen. Dabei können sowohl die Abweichung von der vom Auswertesystem definierten Mitte (y'-Richtung) des Erfassungsbereichs 8 als auch bei Benutzung eines optischen Systems 10 Veränderungen der optischen Vergrößerung (1/1', z'-Richtung) korrigiert werden.

Für die Justage des Meßsystems werden die beiden Spuren 2 mit Strichen parallel zur Meßrichtung 5 benutzt, um das Sensorarray 6 an eine vom Auswertesystem definierte Mitte einzustellen (y'-Richtung) und um bei Benutzung eines optischen Systems 10 die optische Vergrößerung (1/1') einzustellen (z'-Richtung). Außerdem ist es möglich, den Strichcodeträger 7 in den für Fehler relevanten Richtungen für alle Meßpositionen auszurichten, wobei die definierte Mittenposition (y-Richtung) und die weichung der optischen Vergrößerung (1/1', z-Richtung) durch Lageänderung des Strichcodeträgers 7 eingestellt werden kann. Die Auswertung der Positionsdifferenzen der Striche der beiden äußeren spiegelbildlich ausgebildeten Spuren 3 mit periodischer Strichstruktur erlaubt durch Abgleich auf Abstandsgleichheit zur Mitte des sungsbereichs 8 des Sensorarrays 6 die winkelgenaue Einstellung β des Sensorarrays 6. Durch Nutzung der kompletten Spurinformationen aller Spuren 1, 2, 3 kann ein Nullpositionsabgleich durchgeführt werden (y'-Richtung). Bei der Justage kann damit das Meßsystem in der Größenordnung der erfaßbaren Genauigkeit eingestellt werden.

Zur Bestimmung der Absolutposition des Meßwertes bei justierter Meßeinrichtung wird durch Auswertung der zwei Spuren 2 mit Strichen längs der Meßrichtung 5 der Fehler der Abweichung von der vom Auswertesystem definierten Mitte (y'-Richtung) und der Fehler der optischen Vergrößerung (1/1', z-Richtung) bei Benutzung eines optischen Systems 10 korrigiert. Die Korrektur der Winkelabweichung β des Sensorarrays 6 von dem von der Strichstruktur vorgegebenen Winkel β=90° erfolgt durch Korrektur des Abstandsunterschiedes der beiden äußeren Spuren 3 mit spiegelbildlich angeordneten Strichen mit periodischer Strichstruktur zur Mittellinie der Strichstruktur bzw. zur optischen Achse 11. Die Kompensation der Winkelabweichung ist allerdings nur bei Positionierbewegungen sinnvoll, bei denen die Strichabstände der beiden Spuren 3 mit periodischer Strichstruktur in einem definierten Bereich als konstant angesehen werden können.

Das Wegsegment wird aus der Strichfolge des Strichcodes der mittleren Spur 1 mit nichtperiodischer Strichstruktur bestimmt.

Die Absolutposition setzt sich aus dem ermittelten Wegsegment und der Position innerhalb der beiden Spuren 3 mit periodischer Strichstruktur, d.h. der Teilung innerhalb des Wegsegmentes zusammen, wobei eine Angabe der Absolutposition unter Benutzung der Teilung innerhalb eines Wegsegmentes nur sinnvoll ist, wenn die Strichabstände der beiden Spuren 3 in einem definierten Bereich als konstant angesehen werden können. Bei hohen Positioniergeschwindigkeiten wird daher nur das Wegsegment bestimmt.

Die Absolutposition ergibt sich damit aus dem Wegsegment und der Teilung innerhalb des Wegsegmentes unter Beachtung der Fehlerkorrektur.

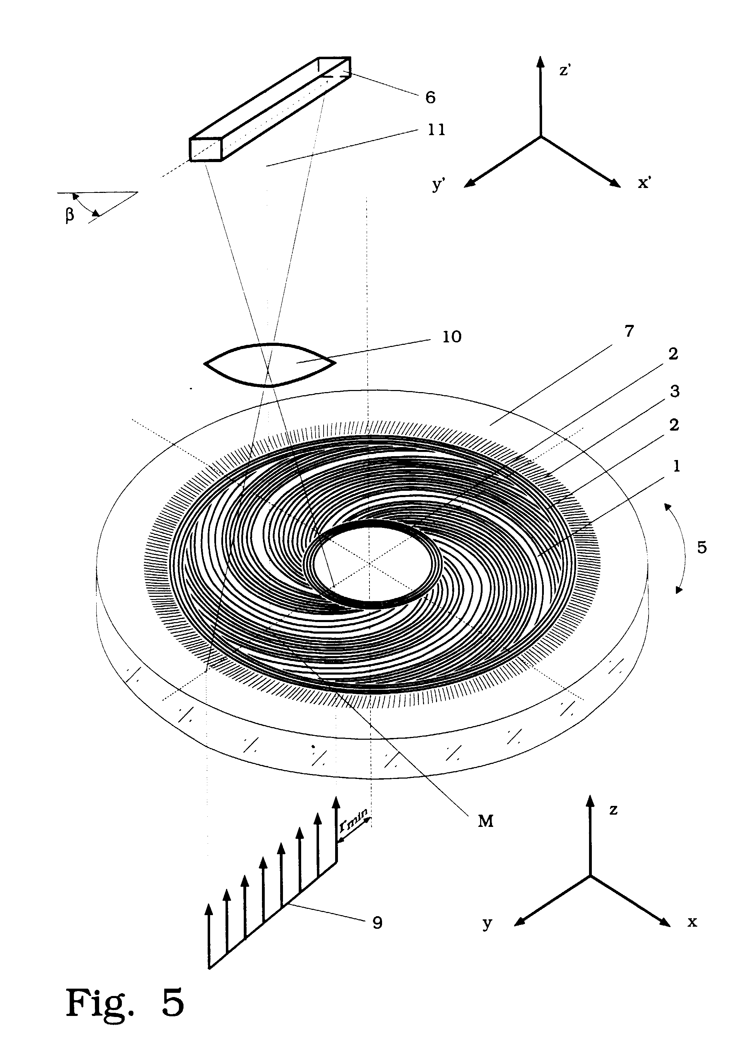

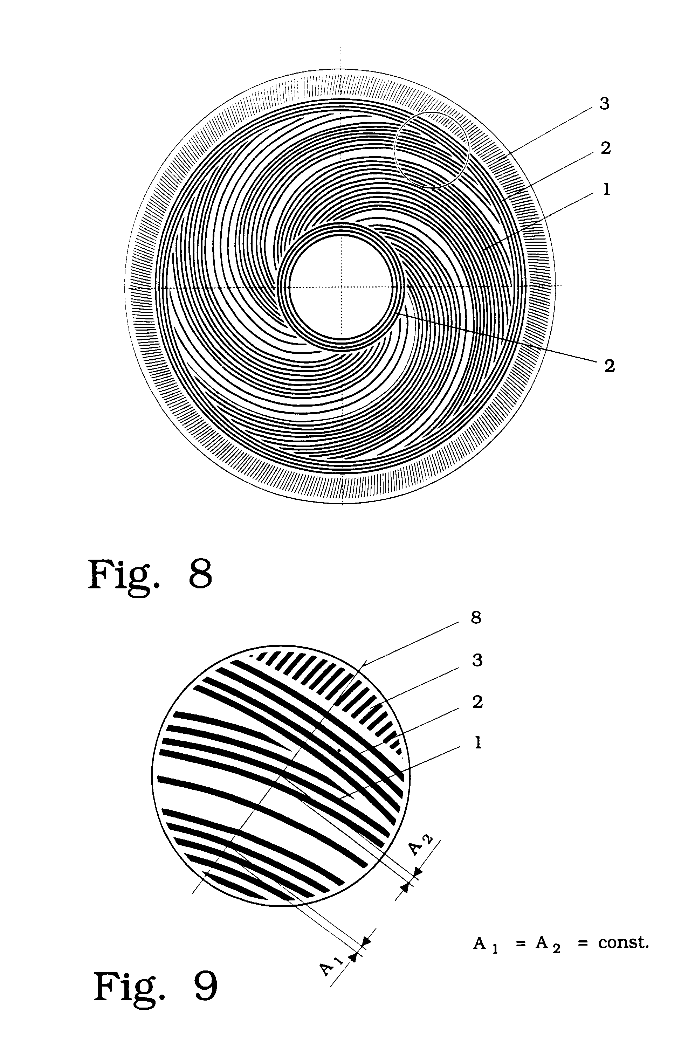

Die in der Figur 5 dargestellte Meßeinrichtung zeigt ein absolutes Winkelmeßsystem, das optisch die in Figur 8 bis Figur 11 dargestellten, mittels einer Lichtquelle 9 beleuchteten Spuren 1, 2, 3 des Strichcodeträgers 7 über ein optisches System 10 abtastet. Der Strichcodeträger 7 ist als lichtdurchlässige Codescheibe ausgeführt, wobei der lichtundurchlässige Strichcode auf dessen Oberfläche aufgetragen ist. Die Meßwerterfassung erfolgt über eine CCD-Zeile als Sensorarray 6. Die Analogwerte des Sensorarrays 6 werden der werteeinrichtung in Form von Vektoren, aus denen die Flankenwerte (High-Low- und Low-High-Übergänge) gebildet werden, als Positionsinformationen bereitgestellt. Zur Erhöhung der Auflösung kann hierbei zusätzlich ein Interpolationsverfahren angewendet werden. Die Anordnung des Sensorarrays 6 erfolgt radial im rechten Winkel β zur Meßrichtung 5. Die optische Achse 11 liegt senkrecht zum Strichcodeträger 7. Der Erfassungsbereich des Sensorarrays umspannt den Bereich zwischen $r_{min}$ und $r_{max}$.

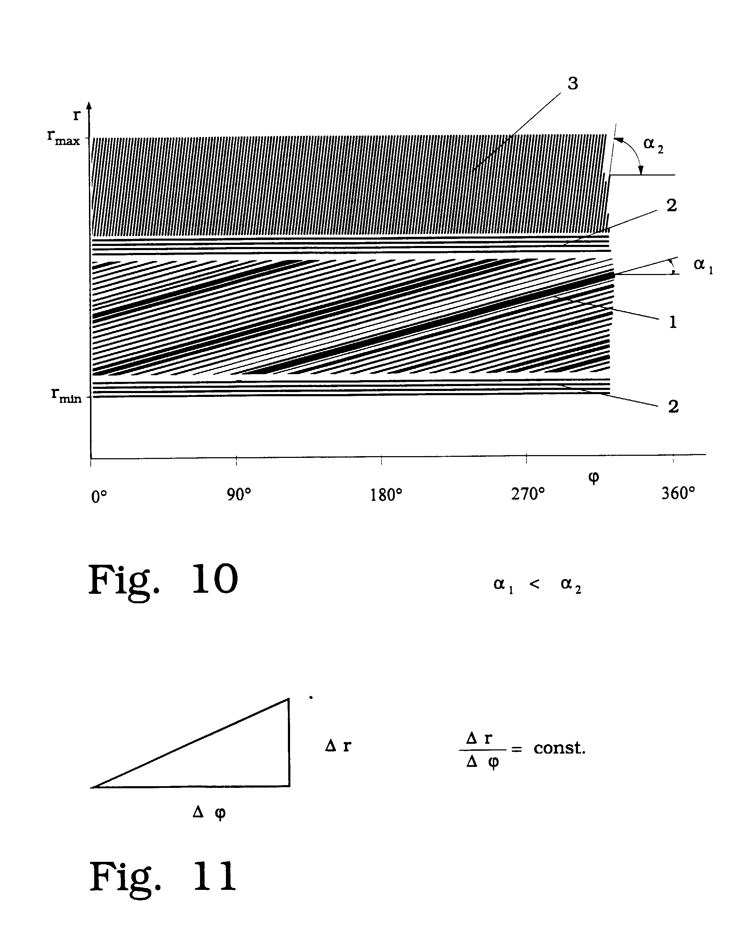

Der Strichcodeträger 7 weist vier Spuren auf, die in drei Gruppen 1, 2, 3 eingeteilt sind. Die Striche der zweiten Spur 1 vom Codescheibenmittelpunkt aus betrachtet besitzen eine nichtperiodische Struktur, gekennzeichnet durch einen flachen Anstiegswinkel $\alpha_1$ der Striche bezüglich der Meßrichtung 5. Die Striche der äußersten Spur 3 besitzen eine periodische Struktur, gekennzeichnet durch einen steilen Anstieg $\alpha_2$ der Striche bezüglich der Meßrichtung 5 und einen flachen Anstieg bezüglich der Abtastrichtung des Sensorarrays 6. Der Anstieg der Striche in den Spuren bezogen auf den Winkel ist, wie in Figur 10 und Figur 11 dargestellt, konstant ($\Delta r/\Delta\varphi=$ konst.). Die Flanken der Striche beschreiben damit die Form einer Archimedischen Spirale. Damit entfallen die bei Winkelmeßeinrichtungen sonst üblichen winkelfunktionsabhängigen Korrekturrechnungen. Die dritte Spur 2 und die innerste Spur 2 besitzen in Form von konzentrischen Kreisen Striche längs zur Meßrichtung.

Die Auswertung der Strichstrukturen erlaubt sowohl die Unterstützung der Justage als auch die Ermittlung der absoluten Winkelposition mit Fehlerkorrektur. Die Absolutwinkelangabe setzt sich aus einem Winkelsegment $\Delta\varphi$ und der Teilung innerhalb eines Winkelsegments $\Delta\varphi$ zusammen, wobei bei großen Drehgeschwindigkeiten nur das Winkelsegment $\Delta\varphi$ erfaßbar ist.

Bei der Auswertung des Strichcodes zur Bestimmung des Absolutwinkels und Unterstützung der Justage können Auswirkungen von Justageabweichungen des Meßsystems und Fertigungsabweichungen der Strichstruktur des Strichcodeträgers 7 durch Mittelung über die Anzahl der Flanken (Kanten der Striche) je Spur verringert werden. Die Anzahl der erfaßten Flanken je Spur erhöht bei deren Auswertung die statistische Sicherheit des Meßwertes.

Die Auswertung der Spur 1 mit nichtperiodischer Struktur ermöglicht die Bestimmung des Winkelsegmentes $\Delta\varphi$. Dieses Winkelsegment $\Delta\varphi$ ist bei einem kleinen Winkel $\alpha_1$ der Striche der Spur 1 bezüglich der Meßrichtung 5 auch bei großen Positionierbewegungen erfaßbar.

Die Auswertung der Spur 3 mit periodischer Struktur ermöglicht in Verbindung mit dem ermittelten Winkelsegment $\Delta\varphi$ durch Unterteilung dieses Winkelsegmentes $\Delta\varphi$ die Bestimmung des Absolutwinkels. Ein kleiner Winkel $\alpha_2$ der Striche der Spur 3 bezüglich der Richtung des Sensorarrays 6 erlaubt eine sehr hohe Auflösung.

Zur Fehlerkorrektur werden zwei Spuren 2 mit Strichen längs zur Meßrichtung 5, also mit konzentrischen Kreisen, herangezogen. Dabei können sowohl die durch Exzentrizität der Strichcodescheibe 7 und ungenauer Einstellung hervorgerufenen Abweichungen von der vom Auswertesystem definierten Position der optischen Achse (11, y'-Richtung) als auch bei Benutzung eines optischen Systems 10 Veränderungen der optischen Vergrößerung (1/1' z'-Richtung) korrigiert werden.

Für die Justage des Meßsystems werden die beiden Spuren 2 mit Strichen längs zur Meßrichtung 5, also mit konzentrischen Kreisen, benutzt, um das Sensorarray 6 an eine vom Auswertesystem definierte Position der optischen Achse 11 einzustellen (y'-Richtung) und bei Benutzung eines optischen Systems 10 die optische Vergrößerung (1/1') einzustellen (z'-Richtung). Durch Nutzung der kompletten Spurinformation aller Spuren 1, 2, 3 kann ein Nullpositionsabgleich durchgeführt werden (y'-Richtung). Bei der Justage kann damit das Meßsystem in der Größenordnung der damit erfaßbaren Genauigkeit eingestellt werden.

Zur Bestimmung des Absolutwinkels des Meßwertes bei justierter Meßeinrichtung wird durch Auswertung der zwei Spuren 2 mit Strichen in Meßrichtung 5 der Fehler der Abweichung von der vom Auswertesystem definierten Mitte (y'-Richtung) und der Fehler der optischen Vergrößerung (1/1', z'-Richtung) bei Benutzung eines optischen Systems 10 korrigiert.

Das Winkelsegment $\Delta\varphi$ wird aus der Strichfolge des Strichcodes der Spur 1 mit nichtperiodischer Strichstruktur bestimmt.

Die gesamte Absolutwinkelangabe setzt sich aus dem ermittelten Winkelsegment $\Delta\varphi$ der Spur 1 und der Position der Spur 3 mit periodischer Strichstruktur, d.h. der Teilung innerhalb des Winkelsegmentes (Feinposition),zusammen, wobei eine Angabe dieses Absolutwinkels nur sinnvoll ist, wenn die Strichabstände der Spur 3 in einem definierten Bereich als konstant angesehen werden können. Bei hohen Positioniergeschwindigkeiten wird daher nur das Winkelsegment angegeben.

Die gesamte Absolutwinkelangabe ergibt sich damit aus dem Winkelsegment und der Teilung innerhalb des Winkelsegmentes unter Beachtung der Fehlerkorrektur.

Ein großer Vorteil der Erfindung besteht darin, daß die Bestimmungsgenauigkeit der Lage des Sensorarrays 6 zu der nichtperiodischen Spur 1 und/oder zu der periodischen Spur 3 höher als die Teilungsschrittweite des Sensorarrays 6 ist. Dies wird dadurch erreicht, daß eine Auswerteelektronik aus dem Analogsignal des Sensorarrays 6 ein Vektorfeld bildet, das den Helligkeitsverlauf über dem Sensorarray 6 unabhängig von der Teilungsschrittweite der Elemente des Sensorarrays 6 beschreibt. Das Vektorfeld kann auch als Wertefeld bezeichnet werden, das Positionen der Durchschreitung des Helligkeitssignales (Flankenwechsel LOW->HIGH, HIGH->LOW) an vorgegebenen Grenzen beinhaltet.

Die weiteren erzielbaren Vorteile der erfindungsgemäß ausgestalteten Positionsmeßsysteme nach den Figuren 4 bis 11 gegenüber bekannten Längen- und Winkelmeßsystemen sind:

- höhere Auflösung bei gleichem Bauteilaufwand,

- Teilung der Auswertung in Grob- und Feinpositionsbestimmung,

- Hohe Dynamik (Absolutpositionsangabe durch Bestimmung der Grobposition bei hohen Positioniergeschwindigkeiten),

- keine vom Auswertesystem auszugleichende breitendifferenzen der Striche innerhalb der Spuren im gesamten Erfassungsbereich des Sensorarrays,

- Möglichkeit der Justierung des Sensorarrays und des Trägers der Strichstruktur durch eine spezielle Auswertung der Signale des Sensorarrays ohne zusätzliche Meßgeräte,

- Erkennbarkeit von durch Lageabweichungen, Verschmutzungen, und Störungen hervorgerufenen Fehlern.

Bei allen Ausführungsbeispielen der Erfindung kann zusätzlich zu den gezeigten Spuren 1, 2 und 3 eine weitere periodische Teilungsspur vorgesehen werden. Die Abtastung dieser Spur kann mit einer zusätzlichen Abtasteinheit erfolgen. Die Abtastung und Auswertung (Interpolation) derartiger Spuren ist bei inkrementalen Positionsmeßsystemen bekannt und muß nicht näher erläutert werden.

## Aufstellung der verwendeten Bezugszeichen

| | |
|---|---|
| 1 | Spur mit nichtperiodischer Strichstruktur |
| 2 | Spur parallel zur Meßrichtung |
| 3 | Spur mit periodischer Strichstruktur |
| 5 | Meßrichtung |
| M | Mittenposition des Erfassungsbereiches des Sensorarrays |
| 6 | Sensorarray |
| 7 | Strichcodeträger |
| 8 | Erfassungsbereich des Sensorarrays |
| 9 | Lichtquelle |
| 10 | optisches System |
| 11 | optische Achse |
| $\varphi$ | Winkelwert |
| r | Radius |
| $r_{min}$ | minimaler Radius des Erfassungsbereiches |
| $r_{max}$ | maximaler Radius des Erfassungsbereiches |
| $\Delta\varphi$ | Winkelsegment |
| r | Radiussegment |
| $\alpha_1$ | Winkel zwischen Meßrichtung und Strichrichtung der Spur mit nichtperiodischer Struktur |
| $\alpha_2$ | Winkel zwischen Meßrichtung und Strichrichtung der Spur mit periodischer Struktur |
| $\beta$ | Winkel zwischen Meßrichtung und Erfas- |

sungsrichtung des Sensorarrays

1 Länge des Erfassungsbereiches auf dem Strichcodeträger

1' Länge des Erfassungsbereiches des Sensorarrays

x x-Koordinate des Strichcodeträgers (Meßrichtung)

y y-Koordinate des Strichcodeträgers (Erfassungsrichtung)

z z-Koordinate des Strichcodeträgers

x' x-Koordinate des Sensorarrays

y' y-Koordinate des Sensorarrays (Erfassungsrichtung)

z' z-Koordinate des Sensorarrays

$S_o$ Bezugspunkt einer schrägen Linie

$S_m$ vom Sensorarray gemessener Weg

S Wegstrecke

K Konstante

**Patentansprüche**

1. Absolutes Positionsmeßsystem zur Bestimmung der Lage zweier relativ zueinander beweglicher Objekte mit

- einem am ersten Objekt angeordneten Strichcodeträger (7), der in einer in Meßrichtung (5) angeordneten Spur (1) mehrere zueinander parallel verlaufende Striche trägt,

- die Striche dieser Spur (1) eine Winkelneigung $\alpha_1$ von 0°<$\alpha_1$<90° bezüglich der Meßrichtung (5) aufweisen,

- einem am zweiten Objekt angeordneten Sensorarray (6) mit einer linearen Matrix von Sensorelementen in Richtung des Erfassungsbereiches (8), bei dem bei der optischen Abtastung des Strichcodeträgers (7) jedes Sensorelement des Sensorarrays (6) einen mittleren Helligkeitswert zur Verfügung stellt und aus der Folge aller dieser Werte des gesamten Sensorarrays (6) ein Analogsignal gebildet wird, und

- der Erfassungsbereich (8) des Sensorarrays (6) eine von der Meßrichtung (5) und der Winkelneigung $\alpha_1$ der Striche der Spur (1) abweichende Winkelneigung β besitzt, dadurch gekennzeichnet, daß

- die aufeinanderfolgenden Striche der Spur (1) eine nichtperiodische Strichstruktur in Form einer Folge von unterschiedlichen Codemustern bilden, und daß

- das durch Abtastung der nichtperiodischen Strichstruktur gewonnene Analogsignal des Sensorarrays (6) einer Auswerteelektronik zugeführt wird, welche daraus die absolute Position der beiden Objekte zueinander im Meßrichtung (5) ermittelt.

2. Absolutes Positionsmeßsystem nach Anspruch 1, dadurch gekennzeichnet, daß die Striche der nichtperiodischen Spur (1) unterschiedliche Abstände und/oder unterschiedliche Breiten aufweisen.

3. Absolutes Positionsmeßsystem nach einem der Ansprüche 1 oder 2, dadurch gekennzeichnet, daß zumindest eine weitere Spur (3) in Meßrichtung (5) angeordnet ist, und daß diese Spur (3) zueinander parallel verlaufende Striche aufweist, die eine periodische Strichstruktur bilden, wobei die Striche dieser Spur (3) eine Winkelneigung $\alpha_2$ von 0°<$\alpha_2$<90° bezüglich der Meßrichtung (5) aufweisen und die Winkelneigung des Sensorarrays (6) von dieser Winkelneigung $\alpha_2$ der Striche abweicht.

4. Absolutes Positionsmeßsystem nach Anspruch 3, dadurch gekennzeichnet, daß die Striche der nichtperiodischen Spur (1) einen kleineren Winkel ($\alpha_1$) mit der Meßrichtung (5) einschließen, als die Striche der periodischen Spur (3).

5. Absolutes Positionsmeßsystem nach Anspruch 4, dadurch gekennzeichnet, daß die Striche der periodischen Spur (3) einen kleineren Winkel mit dem Erfassungsbereich (8) des Sensorarrays (6) einschließen, als die Striche der nichtperiodischen Spur (1).

6. Absolutes Positionsmeßsystem nach einem der Ansprüche 3 bis 5, dadurch gekennzeichnet, daß zwei Spuren (3) mit periodischer Strichstruktur zueinander spiegelbildlich angeordnet sind.

7. Absolutes Positionsmeßsystem nach einem der vorhergehenden Ansprüche 1 bis 6, dadurch gekennzeichnet, daß zumindest eine weitere Spur (2) mit zumindest einem parallel zur Meßrichtung (5) verlaufenden Strich auf dem Strichcodeträger (7) angeordnet ist.

8. Absolutes Positionsmeßsystem nach einem der vorhergehenden Ansprüche 1 bis 7, dadurch gekennzeichnet, daß eine Auswerteelektronik aus dem Analogsignal des Sensorarrays (6) ein Vektorfeld bildet, das den Helligkeitsverlauf über dem Sensorarray (6) unabhängig von der Teilungsschrittweite der Elemente des Sensorarrays (6) beschreibt, wodurch die Bestimmungsgenauigkeit der Lage des Sensorarrays (6) zu der nichtperiodischen Spur (1) und/oder zu der periodischen Spur (3) höher als die Teilungsschrittweite des Sensorarrays (6) ist.

## Claims

1. Absolute position measuring system for determining the position of two relatively movable objects with

   - a bar code carrier (7) arranged on the first object and supporting in one track (1) arranged in the measuring direction (5) several parallel lines;
   - the lines of this track (1) have an angular incline $\alpha_1$ of $0° < \alpha_1 < 90°$ relative to the measuring direction (5);
   - a sensor array (6) arranged on the second object with a linear matrix of sensor elements in the direction of the detection area (8) wherein with optical scanning of the bar code carrier (7) each sensor element of the sensor array (6) provides a mean brightness value and from the result of all of these values of the entire sensor array (6) an analogue signal is formed, and
   - the detection area (8) of the sensor array (6) has an angular incline $\beta$ deviating from the measuring direction (5) and angle incline $\alpha_1$ of the lines of the track (1), characterised in that
   - the successive lines of the track (1) form a non-periodic line structure in the form of a sequence of different code patterns, and that
   - the analogue signal of the sensor array (6) obtained by scanning the non-periodic line structure is sent to an evaluating electronics unit which determines from this the absolute position of the two objects relative to each other in the measuring direction (5).

2. Absolute positioning system according to claim 1 characterised in that the lines of the non-periodic track (1) have different spacings and/or different widths.

3. Absolute positioning system according to one of claims 1 or 2 characterised in that at least a further track (3) is arranged in the measuring direction (5) and that this track (3) has parallel aligned lines which form a periodic line structure wherein the lines of this track (3) have an angle incline $\alpha_2$ of $0° < \alpha_2 < 90°$ relative to the measuring direction (5) and the angle incline of the sensor array (6) deviates from this angle incline $\alpha_2$ of the lines.

4. Absolute positioning system according to claim 3 characterised in that the lines of the non-periodic track (1) include a smaller angle ($\alpha_1$) with the measuring direction (5) than the lines of the periodic track (3).

5. Absolute positioning system according to claim 4 characterised in that the lines of the periodic track (3) include a smaller angle with the detection area (8) of the sensor array (6) than the lines of the non-periodic track (1).

6. Absolute positioning system according to one of claims 3 to 5 characterised in that two tracks (3) with periodic line structure are arranged mirror symmetrical relative to each other.

7. Absolute positioning system according to one of the preceding claims 1 to 6 characterised in that at least one further track (2) with at least one line running parallel to the measuring direction (5) is arranged on the bar code carrier (7).

8. Absolute positioning system according to one of the preceding claims 1 to 7 characterised in that an evaluating electronics unit forms from the analogue signal of the sensor array (6) a vector field which describes the brightness path over the sensor array (6) independently of the division step width of the elements of the sensor array (6) whereby the accuracy of determining the position of the sensor array (6) for the non-periodic track (1) and /or the periodic track (3) is higher than the division step width of the sensor array (6).

## Revendications

1. Système de mesure de position absolue pour déterminer la position de deux objets mobiles l'un par rapport à l'autre, comportant

   - un support (7) de code formé de traits disposé sur le premier objet et qui porte, sur une piste (1) disposée dans la direction de mesure (5), plusieurs traits parallèles,
   - les traits de cette piste (1) font un angle d'inclinaison $\alpha_1$ tel que $0° < \alpha_1 < 90°$, par rapport à la direction de mesure (5),
   - un réseau (6) de détecteurs, qui est disposé sur le second objet et comporte une matrice linéaire d'éléments de détection dans la direction de la zone de détection (8), dans laquelle, lors de l'exploration optique du support (7) de code formé de traits, chaque élément de détection du réseau (6) de détecteurs fournit une valeur de luminosité moyenne et un signal analogique est formé à partir de la suite de toutes ces valeurs de l'ensemble du réseau (6) de détecteurs, et
   - la zone de détection (8) du réseau (6) de détecteurs fait par rapport à la direction de mesure (5) un angle d'inclinaison $\beta$ qui diffère de l'angle d'inclinaison $\alpha_1$ des traits de la piste (1),

   caractérisé en ce que

- les traits successifs de la piste (1) forment une structure non périodique de traits sous la forme d'une suite de modèles de code différents,
- le signal analogique du réseau (6) de détecteurs, qui est obtenu par balayage de la structure non périodique de traits, est envoyé à une unité électronique d'évaluation, qui détermine, à partir de là, la position absolue des deux objets l'un par rapport à l'autre dans la direction de mesure (5).

2. Système de mesure de position absolue selon la revendication 1, caractérisé en ce que les traits de la piste non périodique (1) sont séparés par des distances différentes et/ou ont des largeurs différentes.

3. Système de position absolue selon l'une des revendications 1 ou 2, caractérisé en ce qu'au moins une piste (3) est disposée dans la direction de mesure (5) et que cette piste (3) comporte des traits parallèles, qui forment une structure périodique de traits, les traits de cette piste (3) faisant un angle d'inclinaison $\alpha_2$, tel que $0° < \alpha_2 < 90°$, par rapport à la direction de mesure (5) et que l'angle d'inclinaison du réseau de détecteurs (6) diffère de cet angle d'inclinaison $\alpha_2$ des traits.

4. Système de mesure de position absolue selon la revendication 3, caractérisé en ce que les traits de la piste non périodique (1) font avec la direction de mesure (5), un angle $\alpha_1$ inférieur à celui des traits de la piste périodique (3).

5. Système de mesure de position absolue selon la revendication 4, caractérisé en ce que les traits de la piste périodique (3) font, avec la zone de détection (8) du réseau (6) de détecteurs, un angle inférieur à celui des traits de la piste non périodique (1).

6. Système de mesure de position absolue selon l'une des revendications 3 à 5, caractérisé en ce que deux pistes (3) possédant des structures périodiques de traits sont disposées symétriquement.

7. Système de mesure de position absolue selon l'une des revendications précédentes 1 à 6, caractérisé en ce qu'au moins une autre piste (2) comportant au moins un trait parallèle à la direction de mesure (5) est disposée sur le support du code (7) formé de traits.

8. Système de mesure de position absolue selon l'une des revendications précédentes 1 à 7, caractérisé en ce qu'un système électronique d'évaluation forme, à partir du signal analogique du réseau (6) de détecteurs, un champ de vecteurs, qui décrit l'allure de la luminosité sur le réseau (6) de détecteurs indépendamment de la valeur du pas de répartition des éléments du réseau (6) de détecteurs, ce qui a pour effet que la précision de détermination de la position du réseau (6) de détecteurs par rapport à la piste non périodique (1) et/ou à la piste périodique (3) est supérieure à la valeur du pas de répartition du réseau (6) de détecteurs.

Fig. 1

# Fig. 2

# Fig. 3

Fig. 4

Fig. 5

**Fig. 6**

$$\alpha_1 < \alpha_2$$

**Fig. 7**

Fig. 8

$A_1 = A_2 = const.$

Fig. 9

# Fig. 10

$\alpha_1 < \alpha_2$

$\Delta r$

$$\frac{\Delta r}{\Delta \varphi} = \text{const.}$$

$\Delta \varphi$

# Fig. 11

Fig. 12

Fig. 13